# FASCICULE DE BREVET EUROPEEN

(11) **EP 0 913 655 B1**
(45) Date de publication et mention de la délivrance du brevet: **21.05.2003**
(21) Numéro de dépôt: 98402537.9
(22) Date de dépôt: 13.10.1998
(51) Int. Cl.: F25J 3/04

(54) **Procédé de construction d'une colonne de rectification par modules préassemblés**
Verfahren zum Herstellen einer Rektifikationsäule durch vormontierte Module
Process for building rectification column with preassembled modules

(30) Priorité: 14.10.1997 FR 9712841; 24.10.1997 FR 9713380
(43) Date de publication de la demande: 06.05.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Bracque, Gilles, 60340 Saint Leu D'Esserent (FR); Perisse, Jean-Louis, 94210 La Varenne (FR)
(74) Mandataire: Le Moenner, Gabriel

(56) Documents cités:
- DE-A- 3 248 345
- FR-A- 2 692 663
- US-A- 3 750 413

## Description

La présente invention concerne un procédé de construction d'une structure intérieure allongée de grandes dimensions, entourée d'une structure extérieure, ladite structure intérieure étant une structure de confinement de fluide destinée à former une partie au moins d'une installation de fourniture de fluide.

L'invention s'applique plus particulièrement à la construction de colonnes de distillation d'air, dont la hauteur peut atteindre 60 mètres, entourée- de leurs charpentes de support.

Sur un site de production, une telle colonne, dont la verticalité doit être parfaite pour assurer un bon déroulement du procédé de distillation, est entourée d'une charpente qui supporte la colonne et tout ou partie de ses équipements, la charpente étant recouverte d'une tôlerie externe de protection.

Jusqu'à présent, pour les colonnes de distillation de grandes dimensions, c'est-à-dire dont les dimensions ne permettent pas le transport, la colonne et sa charpente sont construites ou livrées séparément sur site, puis on érige tout ou partie de la charpente dans laquelle on introduit ultérieurement la colonne. Un tel procédé de construction est complexe et pose de nombreux problèmes d'assemblage de la charpente, de la colonne et de ses équipements, notamment pour respecter la contrainte de verticalité imposée à la colonne.

Un tel procédé de construction pose également des problèmes de sécurité en particulier en raison des hauteurs auxquelles des personnes peuvent être amenées à travailler.

DE-A-3248345 décrit un procédé de construction d'une structure intérieure allongée de grandes dimensions, entourée d'une structure extérieure, les moyens de connexion de la structure et la structure elle-même se trouvant dans des modules indépendents.

L'invention a pour but de remédier aux problèmes mentionnés précédemment et, en particulier, de fournir un procédé de construction d'une structure intérieure de grandes dimensions entourée d'une structure extérieure, permettant d'une part un assemblage rapide sur site répondant à la contrainte de verticalité de la colonne, et permettant d'autre part un préassemblage en atelier avant le transport sur site.

A cet effet, l'invention a pour objet un procédé de construction d'une structure intérieure allongée de grandes dimensions entourée d'une structure extérieure, ladite structure intérieure étant une colonne de distillation destinée à former une partie au moins d'une installation de fourniture de fluide, dans lequel on construit deux modules en assemblant pour chacun des modules une moitié de colonne qui est un tronçon de la structure intérieure avec un tronçon correspondant de la structure extérieure, ces deux modules étant destinés à être assemblés sur site pour constituer la structure intérieure entourée de la structure extérieure.

Selon des modes particuliers de réalisation, le procédé peut comprendre l'une ou plusieurs des caractéristiques suivantes :
- on introduit au moins un tronçon de structure intérieure dans le tronçon de structure extérieure correspondant par enfilage, notamment en le déplaçant sur des rails prévus dans ledit tronçon de structure extérieure disposé sensiblement horizontalement, puis on solidarise ces deux tronçons ;
- on introduit puis on positionne, de manière identique et parallèle par rapport à un axe longitudinal prédéterminé de la structure extérieure, chaque tronçon de structure intérieure dans le tronçon de structure extérieure correspondant avant de solidariser ces deux tronçons ;
- les extrémités de tronçons de structure extérieure et de structure intérieure sont respectivement munies de moyens de guidage de tronçons adjacents, et, après avoir positionné le tronçon de structure intérieure par rapport au tronçon de structure extérieure d'un premier module et solidarisé ces deux tronçons, pour un module adjacent :
   - on introduit le tronçon de structure intérieure dans le tronçon de structure extérieure correspondant,
   - on place, grâce aux moyens de guidage respectifs, le tronçon de structure intérieure et le tronçon de structure extérieure dudit module adjacent respectivement dans le prolongement du tronçon de structure intérieure et du tronçon de structure extérieure du premier module,
   - on aligne les deux tronçons de structure extérieure,
   - on positionne le tronçon de structure intérieure dudit module adjacent par rapport à son tronçon de structure extérieure et on solidarise ces deux tronçons ;
   - on équipe d'au moins une partie de leurs équipements au moins deux tronçons adjacents de structure intérieure, lorsque les modules correspondants sont placés dans le prolongement l'un de l'autre, avant de séparer ces modules ;
   - pour chaque module, on termine la construction en posant une tôlerie de protection sur le tronçon de structure extérieure correspondant, sauf au moins dans les zones de raccordement aux autres modules ;
   - la structure extérieure est une charpente de support ;
   - on assemble un module au dessus de l'autre module pour ériger la structure intérieure sur site ;
   - la verticalité de la structure intérieure devant être assurée sur site :
   - on positionne le module inférieur de telle manière que ledit axe longitudinal du tronçon de structure extérieure correspondant soit vertical, et
   - on assemble successivement les modules suivants au-dessus du module inférieur ;
   - la verticalité de la structure intérieure devant être assurée sur site, on désolidarise provisoirement au moins un tronçon de structure intérieure du tronçon de structure extérieure d'un module érigé pour assurer la verticalité dudit tronçon de structure intérieure ; et
   - on termine d'équiper la structure intérieure notamment en raccordant les équipements des tronçons de structure intérieure adjacents, et
   - on termine de poser la tôlerie de protection.

L'invention sera mieux comprise à la lecture de la description qui va suivre, donnée uniquement à titre d'exemple, et faite en se référant aux dessins annexés, sur lesquels :
- les figures 1A à 1D sont des vues schématiques en perspective de deux moitiés d'une colonne de distillation d'air de grandes dimensions (figures 1B et 1D) et de deux moitiés de sa charpente (figures 1A et 1C), construites pour la mise en oeuvre du procédé de construction selon l'invention,
- la figure 2 est une vue schématique à plus grande échelle de la partie cerclée II de la figure 1A,
- la figure 3 est une vue schématique en perspective illustrant l'enfilage de la moitié inférieure de la colonne dans la moitié inférieure de la charpente pour constituer un module,
- la figure 4 est une vue schématique en bout du module de la figure 3, illustrant le positionnement de la moitié inférieure de colonne dans la moitié inférieure de charpente,
- la figure 5 est une autre vue schématique en bout du module de la figure 3, illustrant la fixation de la jupe de la moitié inférieure de la colonne sur la moitié de la charpente correspondante,
- la figure 6 est une vue schématique latérale, illustrant la liaison entre la moitié supérieure de la colonne et la moitié supérieure de la charpente, et
- les figures 7 et 8 sont des vues schématiques en perspective illustrant respectivement la pose de plats sur les poteaux longitudinaux de la charpente et sur la colonne.

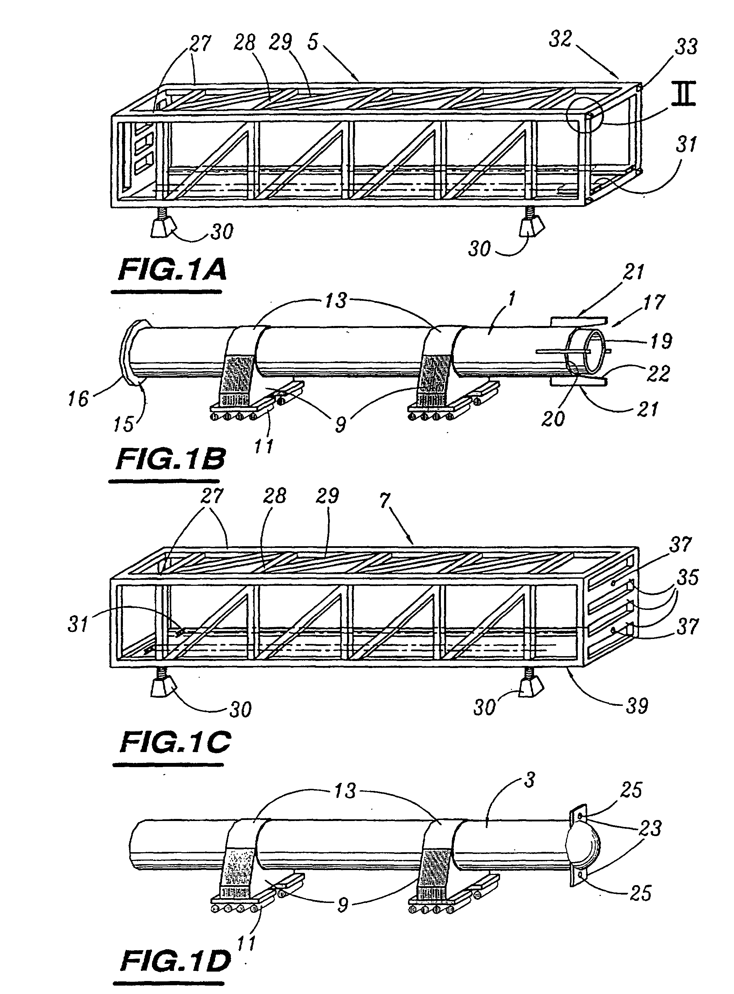

Les figures 1A à 1D représentent schématiquement deux tronçons d'une colonne de distillation d'air d'environ 60 mètres de longueur et deux tronçons de sa charpente, construits en vue de la mise en oeuvre du procédé de construction selon l'invention.

Une moitié inférieure 1 et une moitié supérieure 3 d'une colonne de distillation d'air, de forme générale cylindrique, ainsi que les moitiés inférieure 5 et supérieure 7 correspondantes de sa charpente, de forme générale parallélépipédique, sont disposées sensiblement horizontalement dans un atelier.

Chaque moitié 1 et 3 de colonne repose sur deux berceaux transversaux de support 9 espacés et dont les positions longitudinales par rapport à chaque moitié de colonne sont telles que décrites plus loin. Ces berceaux 9 sont munis de patins 11 à rouleaux d'axes sensiblement orthogonaux aux axes longitudinaux de chaque moitié de colonne. Une ceinture métallique 13 de protection entoure chaque moitié de colonne au niveau de chaque berceau 9.

La moitié 1 de colonne (figure 1B), qui comprend la partie moyenne pression et le vaporisateur-condenseur, non détaillés sur les figures, est prolongée, à son extrémité inférieure (à gauche sur la figure 1), par une jupe de fixation cylindrique 15 terminée par une bride annulaire 16 de fixation. La moitié 1 de colonne comprend à son extrémité supérieure des moyens 17 de guidage de la moitié supérieure 3.

Ces moyens 17 de guidage comportent d'une part un manchon intérieur 19 soudé dans le bord supérieur 20 (à droite sur la figure 1B) de la moitié 1 et dépassant de ce bord, et d'autre part quatre pattes radiales 21 fixées, par exemple par soudage, régulièrement sur la surface extérieure de la moitié 1. Ces pattes 21 comprennent chacune une partie en saillie longitudinalement par rapport au bord supérieur 20. Cette partie en saillie présente une surface intérieure de guidage 22 inclinée radialement vers l'extérieur en s'éloignant longitudinalement de la moitié 1.

La moitié 3 de colonne (figure 1D) est munie au voisinage de son extrémité supérieure (à droite sur la figure 1D) de deux pattes de fixation 23 symétriques et transversales par rapport à l'axe longitudinal de la moitié 3. Ces pattes 23 présentent chacune un orifice 25 d'axe parallèle audit axe longitudinal.

La charpente (figures 1A et 1C) est une ossature métallique comprenant quatre poteaux longitudinaux 27 reliés, sur chaque face de la charpente, par des traverses 28 et des contreventements diagonaux 29. Les deux moitiés 5 et 7 de charpente reposent chacune sur quatre pieds 30 de hauteur réglable. Des rails longitudinaux 31 sont disposés sur la surface intérieure de la face inférieure (sur les figurés 1A et 1C) de chaque moitié 5 et 7 de charpente.

L'extrémité supérieure (à droite sur la figure 1A) de la moitié 5 de charpente est munie de moyens 32 de guidage de la moitié 7 de charpente. Ces moyens 32 de guidage sont composés de quatre troncs de pyramide 33 prolongeant longitudinalement chaque tronçon ou moitié inférieure de poteau longitudinal 27.

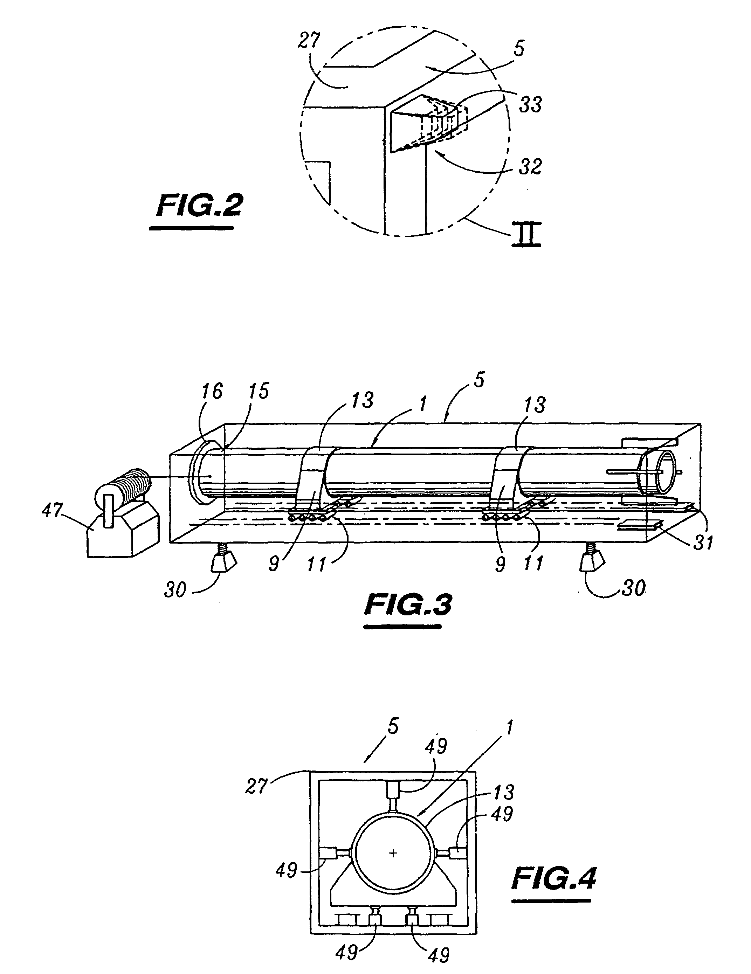

Comme représenté schématiquement sur la figure 2, ces troncs de pyramide 33 ont des dimensions différentes. Typiquement, un premier tronc de pyramide a une longueur (comme vu sur la figure 2) de 200 mm, un deuxième a une longueur de 150 mm et les deux autres ont une longueur de 100 mm. Des ouvertures conjuguées non visibles sur la figure 1C sont ménagées à l'intérieur des extrémités inférieures (à gauche sur la figure 1C) des tronçons ou moitiés supérieures des poteaux longitudinaux 27 de la moitié 7.

La face supérieure (à droite sur la figure 1C) de la moitié 7 de charpente comprend trois traverses 35 sensiblement horizontales. Les traverses 35 inférieure et supérieure sont munies d'orifices centraux 37 d'axes parallèles à l'axe longitudinal de la moitié 7.

Le fond de la moitié 5 de charpente (à gauche sur la figure 1A) est munie de traverses verticales et horizontales, délimitant intérieurement à la charpente une zone de fixation de la bride annulaire 16 de la jupe 15.

La moitié 1 de colonne et la moitié 5 de charpente sont assemblées pour constituer un premier module, comme décrit ci-après.

On assure tout d'abord l'horizontalité de l'axe longitudinal de la moitié 5 de charpente en jouant sur la hauteur des pieds 30. Ce positionnement peut être assuré en utilisant des niveaux ou une autre technique classique pour l'homme du métier.

On introduit ensuite la moitié 1 de colonne dans la moitié 5 de charpente par enfilage en faisant rouler les patins 11 sur les rails 31, grâce à un treuil 47 relié par un câble à l'extrémité inférieure (à gauche sur la figure 3) de la moitié 1.

On place longitudinalement la moitié 1 de colonne dans la moitié 5 de charpente de telle manière que les deux berceaux 9 soient chacun en regard de traverses de chacune des grandes faces de la moitié 1, et de telle manière que la jupe 15 soit à quelques millimètres des traverses du fond de la moitié 5 (à gauche sur la figure 3). Les positions longitudinales des berceaux 9 par rapport à la moitié 1 de colonne ont donc été choisies, en effectuant des mesures adéquates, pour obtenir ce résultat.

On place alors cinq vérins à vis 49 au niveau de chaque berceau 9, soit dix vérins au total entre la moitié 5 de charpente et la moitié 1 de colonne.

Comme illustré par la figure 4, pour chaque berceau 9, un vérin 49 vertical est disposé entre la moitié 1 et une traverse de la grande face supérieure (sur la figure 4) de la moitié 5 de charpente, et deux vérins horizontaux sont disposés chacun entre la moitié 1 de colonne et une traverse d'une grande face latérale de la moitié 5 de charpente. Les extrémités intérieures de ces trois vérins 49 prennent appui et sont soudés sur la ceinture 13 entourant la moitié 1, et leurs extrémités extérieures sont fixées sur les traverses associées de la moitié 5.

Deux vérins 49 verticaux sont de plus disposés entre la face inférieure du berceau 9 et une traverse de la grande face inférieure (sur la figure 4) de la moitié 5 de charpente. Leurs extrémités supérieures sont fixées au berceau 9 et leurs extrémités inférieures sur la moitié 5 de charpente. On enlève ensuite les patins 11 sous les deux berceaux 9 de la moitié 1 de colonne, comme représenté sur la figure 4.

On positionne ensuite la moitié 1 par rapport à la moitié 5 de manière que leurs axes longitudinaux soient parallèles et qu'ils aient une position relative choisie et déterminée. Cette position relative peut être déterminée grâce à un dispositif de visée ou en utilisant une autre technique classique pour l'homme du métier.

Cette position relative peut être modifiée en jouant sur les réglages des vérins 49. De préférence, elle est telle que la moitié 1 soit disposée sensiblement dans une position centrale dans la moitié 5.

Une fois le positionnement relatif des moitiés 1 et 5 terminé, on solidarise ces deux moitiés, par exemple par pointage des écrous des vérins 49.

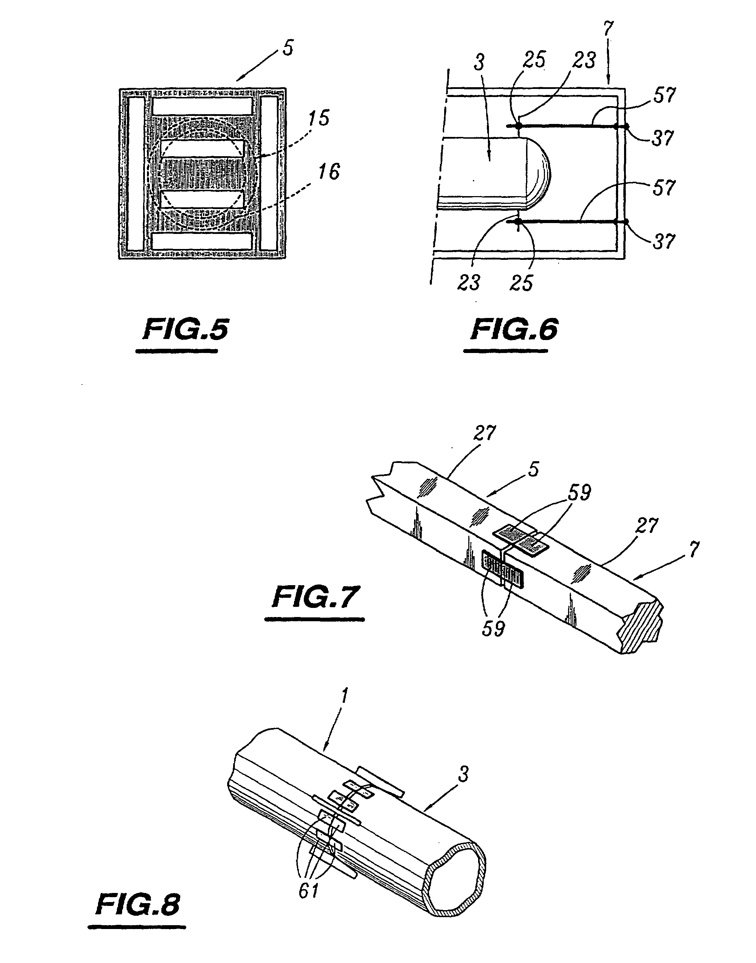

La bride annulaire 16 de la jupe 15 est ensuite soudée, sur toute sa circonférence, comme représentée schématiquement sur la figure 5, sur les traverses du fond de la moitié 5 de charpente pour terminer de solidariser les moitiés 1 et 5.

La moitié de charpente et la moitié de colonne du premier module sont alors positionnées et fixées l'une par rapport à l'autre.

Pour le positionnement relatif de la moitié supérieure 3 de colonne dans la moitié supérieure 7 de charpente afin d'assembler le second module, on procède comme suit.

On assure, de manière analogue à celle utilisée pour la moitié 5 de charpente, l'horizontalité de la moitié 7 de charpente, puis on enfile la moitié 3 de colonne dans la moitié 7 de charpente comme décrit pour le premier module. On dispose dix vérins à vis 49 de manière analogue à celle décrite pour le module inférieur et on monte, grâce à des écrous, une tige 57 (figure 6) entre chaque patte 23 de la moitié 3 et la traverse 35 en regard de la moitié 7.

Chaque tige 57 traverse un orifice 25 et un orifice 37, et des écrous en solidarisent une des extrémités à la patte 23 correspondante et l'autre extrémité à la traverse 35 correspondante.

On peut alors, éventuellement en utilisant une technique analogue à celle utilisée pour le premier module, procéder à un pré-positionnement relatif des axes longitudinaux respectifs de la moitié 7 et de la moitié 3.

On vient ensuite placer, grâce aux moyens 17 et 32 de guidage, les moitiés supérieures 3 et 7 respectivement dans le prolongement des moitiés inférieures 1 et 5. Pour cela, on enfile d'une part les troncs de pyramide 33 dans les ouvertures conjuguées des moitiés supérieures des poteaux 27, en procédant par ordre décroissant de longueur (comme vu sur la figure 2) des troncs de pyramide, et d'autre part le manchon 19 dans la partie inférieure (à gauche sur la figure 1) de la moitié 3 de colonne, de manière à laisser un jeu de quelques millimètres entre les extrémités en regard des moitiés inférieures et supérieures de colonne et de charpente. Les tiges 57 et leurs écrous permettent d'ajuster la distance entre les deux moitiés de colonne.

On assure alors, grâce à un dispositif de visée ou en utilisant une autre technique classique pour l'homme du métier, et en jouant sur la hauteur de pieds 30 supportant la moitié 7 de charpente, l'alignement des moitiés 5 et 7.

On positionne ensuite, de manière analogue à celle utilisée pour le premier module, la moitié 3 de colonne dans la moitié 7 de charpente, de telle manière que l'axe longitudinal de la moitié 3 soit parallèle à l'axe longitudinal de la moitié 7, et de telle manière que les coordonnées relatives de ces deux axes soient les mêmes que les coordonnées relatives des deux axes correspondants du premier module.

Une fois cette opération de positionnement terminée, on solidarise définitivement la moitié 3 de colonne et la moitié 7 de charpente, en pointant par exemple les écrous des vérins 49 et des tiges 57.

On vient alors souder des plats métalliques sur les extrémités en regard des deux moitiés de colonne et des deux moitiés de charpente pour figer le réglage relatif des modules inférieur et supérieur. Ainsi, chaque moitié de poteau longitudinal 27 (figure 7) porte des plats 59 aux extrémités intérieures à la charpente de ses faces longitudinales extérieures à la charpente. La surface extérieure de chaque moitié de colonne reçoit huit plats 61 (figure 8) répartis régulièrement à son extrémité adjacente à l'autre moitié de colonne. Les plats 59 et 61 des modules inférieurs et supérieurs sont disposés les uns en face des autres. Chaque plat 59 et 61 comporte une partie, en saillie longitudinalement par rapport à l'élément du module sur lequel il est fixé, dont un bord prend appui sur un bord du plat fixé en regard sur l'autre module.

On a donc fixé, de manière identique pour le module inférieur puis pour le module supérieur, les tronçons de colonne par rapport à l'axe longitudinal de la charpente, avec l'axe de chaque tronçon de colonne parallèle à l'axe du tronçon de charpente correspondant.

On équipe ensuite la moitié 1 de colonne puis la moitié 3 de colonne en montant les tuyauteries et les dispositifs d'instrumentation respectifs.

Les modules inférieur et supérieur étant alignés, le montage des parties de ces équipements proches des extrémités en regard des deux modules est effectué en assurant leur alignement, par exemple en utilisant des manchons de raccordement temporaires.

On pose pour chaque module la tôlerie de protection, sauf au moins dans les parties de raccordement des deux modules, puis on désolidarise les deux modules par exemple en utilisant des vérins.

On dispose alors des moyens de protection des extrémités ouvertes de la colonne, de ses équipements et de sa charpente, par exemple des capotes étanches à l'eau.

Les modules inférieur et supérieur sont alors prêts à être transportés sur un site industriel. Les dimensions de ces modules, inférieures à 30 m, permettent leur transport par des moyens classiques.

L'assemblage de ces modules sur site s'effectue comme décrit ci-après.

On érige le module inférieur en plaçant le fond de la moitié 5 de charpente (à gauche sur la figure 1A) sur des pieds de hauteur réglable disposés, par exemple, aux quatre coins du fond de charpente. Grâce, par exemple, à un dispositif de visée, ou toute autre technique classique pour l'homme du métier, on assure la verticalité de l'axe longitudinal de la moitié 5 de charpente.

L'axe longitudinal de la moitié 1 de colonne étant parallèle à l'axe longitudinal de la moitié 5 de charpente, en modifiant la hauteur respective des pieds sur lesquels repose la moitié 5 de charpente, on assure aisément la verticalité de la moitié 1 de colonne.

On fige alors le réglage du module inférieur par rapport au sol du site industriel, puis on vient placer, par exemple avec des grues, le module supérieur au-dessus du module inférieur, en guidant la partie inférieure du module supérieur (à gauche sur la figure 1C), grâce aux moyens de guidage 17 et 32. On fait pénétrer successivement les troncs de pyramide 33, par longueurs décroissantes, dans les ouvertures conjuguées des moitiés de poteaux longitudinaux 27 de la moitié 7 de charpente et en faisant pénétrer le manchon 19 dans la moitié 3 de colonne.

Lorsque les plats 59 et 61 des modules inférieur et supérieur sont en contact, on a reconstitué le pré-réglage effectué en atelier, assurant le bon alignement des deux moitiés de colonne. L'axe longitudinal de la colonne est donc disposé verticalement.

On soude alors les moitiés 1 et 3 de colonne et les moitiés 5 et 7 de charpente en comblant par un cordon de soudure les quelques millimètres prévus entre les modules supérieur et inférieur. On raccorde les équipements du module inférieur et du module supérieur, puis on termine de poser la tôlerie de protection.

Le procédé selon l'invention permet donc de préassembler en atelier une colonne de distillation de grandes dimensions et sa charpente en modules transportables, et permet, sur site, un assemblage vertical rapide répondant aux contraintes de verticalité imposées aux colonnes de distillation.

La construction de chaque module peut être également effectuée directement sur site.

Selon une variante simplifiée, on peut, après enfilage des moitiés 1 et 3 de colonne respectivement dans les moitiés 5 et 7 de charpente, procéder à une fixation temporaire des moitiés 1 et 3 de colonne dans les moitiés 5 et 7 de charpente après un positionnement relatif moins précis que dans le procédé de construction précédent. On procède alors à une désolidarisation sur site, pour assurer la verticalité de chaque moitié de colonne d'un module érigé, puis à une solidarisation définitive. Ainsi, on peut ériger le premier module, désolidariser les moitiés inférieures 1 et 5, assurer la verticalité de la moitié 1 de colonne, solidariser définitivement les moitiés inférieures 1 et 5, puis placer le second module au-dessus du premier et procéder de manière analogue pour ce dernier.

On peut également placer tout d'abord le second module sur le premier module érigé, puis procéder aux opérations de désolidarisation moitié de colonne/moitié de charpente, positionnement vertical de moitié de colonne, et solidarisation définitive moitié de colonne/moitié de charpente pour les deux modules.

Dans d'autres variantes, on peut également pré-équiper les moitiés 1 et 3 de colonne et/ou les moitiés 5 et 7 de charpente avant de procéder à l'introduction des moitiés 1 et 3 de colonne dans les moitiés 5 et 7 de charpente.

## Revendications

1. Procédé de construction d'une structure intérieure allongée de grandes dimensions entourée d'une structure extérieure, ladite structure intérieure étant une colonne de distillation destinée à former une partie au moins d'une installation de fourniture de fluide, dans lequel on construit deux modules en assemblant pour chacun des modules une moitié de colonne qui est un tronçon (1, 3) de la structure intérieure avec un tronçon correspondant (5, 7) de la structure extérieure, ces deux modules étant destinés à être assemblés sur site pour constituer la structure intérieure entourée de la structure extérieure.

2. Procédé selon la revendication 1, **caractérisé en ce qu'**on introduit au moins un tronçon (1, 3) de structure intérieure dans le tronçon (5, 7) de structure extérieure correspondant par enfilage, notamment en le déplaçant sur des rails (31) prévus dans ledit tronçon (5, 7) de structure extérieure disposé sensiblement horizontalement, puis on solidarise ces deux tronçons.

3. Procédé selon la revendication 2, **caractérisé en ce qu'**on introduit puis on positionne, de manière identique et parallèle par rapport à un axe longitudinal prédéterminé de la structure extérieure, chaque tronçon (1, 3) de structure intérieure dans le tronçon (5, 7) de structure extérieure correspondant avant de solidariser ces deux tronçons.

4. Procédé selon la revendication 3, **caractérisé en ce que** les extrémités de tronçons de structure extérieure et de structure intérieure sont respectivement munies de moyens (17, 32) de guidage de tronçons adjacents, et **en ce que**, après avoir positionné le tronçon (1) de structure intérieure par rapport au tronçon (5) de structure extérieure d'un premier module et solidarisé ces deux tronçons, pour un module adjacent :
- on introduit le tronçon (3) de structure intérieure dans le tronçon (7) de structure extérieure correspondant,
- on place, grâce aux moyens (17, 32) de guidage respectifs, le tronçon (3) de structure intérieure et le tronçon (7) de structure extérieure dudit module adjacent respectivement dans le prolongement du tronçon (1) de structure intérieure et du tronçon (5) de structure extérieure du premier module,
- on aligne les deux tronçons (5, 7) de structure extérieure,
- on positionne le tronçon (3) de structure intérieure dudit module adjacent par rapport à son tronçon (7) de structure extérieure et on solidarise ces deux tronçons (3, 7).

5. Procédé, selon la revendication 4, **caractérisé en ce qu'**on équipe d'au moins une partie de leurs équipements au moins deux tronçons adjacents (1, 3) de structure intérieure, lorsque les modules correspondants sont placés dans le prolongement l'un de l'autre, avant de séparer ces modules.

6. Procédé selon l'une quelconque des revendications 1 à 5, **caractérisé en ce que** pour chaque module, on termine la construction en posant une tôlerie de protection sur le tronçon (5, 7) de structure extérieure correspondant, sauf au moins dans les zones de raccordement aux autres modules.

7. Procédé selon l'une quelconque des revendications 1 à 6, **caractérisé en ce que** la structure extérieure est une charpente de support.

8. Procédé selon l'une quelconque des revendications 1 à 7, **caractérisé en ce qu'**on assemble un module au dessus de l'autre module pour ériger la structure intérieure sur site.

9. Procédé selon les revendications 3 et 8 la verticalité de la structure intérieure devant être assurée sur site, **caractérisé en ce que** :
- on positionne le module inférieur de telle manière que ledit axe longitudinal du tronçon (5) de structure extérieure correspondant soit vertical, et
- on assemble le module suivant au-dessus du module inférieur.

10. Procédé selon la revendication 8, la verticalité de la structure intérieure devant être assurée sur site, **caractérisé en ce qu'**on désolidarise provisoirement au moins un tronçon (1, 3) de structure intérieure du tronçon (5, 7) de structure extérieure d'un module érigé pour assurer la verticalité dudit tronçon (1, 3) de structure intérieure.

11. Procédé selon l'une quelconque des revendications 8 à 10, **caractérisé en ce que** :
- on termine d'équiper la structure intérieure notamment en raccordant les équipements des tronçons (1, 3) de structure intérieure adjacents, et
- on termine de poser la tôlerie de protection.

## Patentansprüche

1. Verfahren zum Bauen einer länglichen inneren Struktur mit großen Abmessungen, die von einer äußeren Struktur umgeben ist, wobei die innere Struktur eine Destillierkolonne ist, die dazu bestimmt ist, mindestens einen Teil einer Anlage zur Lieferung von Fluid zu bilden, bei der man zwei Module baut, indem man für jedes der Module eine Hälfte der Kolonne, die ein Abschnitt (1, 3) der inneren Struktur ist, mit einem entsprechenden Abschnitt (5, 7) der äußeren Struktur zusammenfügt, wobei die beiden Module dazu bestimmt sind, am Standort zusammengebaut zu werden, um die innere Struktur, die von der äußeren Struktur umgeben ist, zu bilden.

2. Verfahren nach Anspruch 1, **dadurch gekennzeichnet, dass** man mindestens einen Abschnitt (1, 3) innere Struktur in den entsprechenden Abschnitt (5, 7) äußere Struktur durch Einschieben einführt, insbesondere indem man ihn auf Schienen (31) bewegt, die im Abschnitt (5, 7) der äußeren Struktur vorgesehen und im Wesentlichen horizontal angeordnet sind, und dann diese beiden Abschnitte fest miteinander verbindet.

3. Verfahren nach Anspruch 2, **dadurch gekennzeichnet, dass** man identisch und parallel zu einer vorausbestimmten Längsachse der äußeren Struktur jeden Abschnitt (1, 3) innere Struktur in den entsprechenden Abschnitt (5, 7) äußere Struktur einführt und positioniert, bevor man die beiden Abschnitte fest miteinander verbindet.

4. Verfahren nach Anspruch 3, **dadurch gekennzeichnet, dass** die Enden der Abschnitte äußere Struktur und innere Struktur jeweils mit Mitteln (17, 32) zum Führen nebeneinander liegender Abschnitte versehen sind und dass man nach dem Positionieren des Abschnitts (1) innere Struktur in Bezug auf den Abschnitt (5) äußere Struktur eines ersten Moduls und dem festen Verbinden dieser beiden Abschnitte miteinander für ein daneben liegendes Modul:
- den Abschnitt (3) innere Struktur in den entsprechenden Abschnitt (7) äußere Struktur einführt,
- dank der jeweiligen Mittel (17, 32) zum Führen den Abschnitt (3) innere Struktur und den Abschnitt (7) äußere Struktur des daneben liegenden Moduls in der Verlängerung des Abschnitts (1) innere Struktur bzw. des Abschnitts (5) äußere Struktur des ersten Moduls platziert,
- die beiden Abschnitte (5, 7) äußere Struktur fluchtet,
- den Abschnitt (3) innere Struktur des daneben liegenden Moduls in Bezug auf seinen Abschnitt (7) äußere Struktur positioniert und diese beiden Abschnitte (3, 7) fest miteinander verbindet.

5. Verfahren nach Anspruch 4, **dadurch gekennzeichnet, dass** man mindestens zwei nebeneinander liegende Abschnitte (1, 3) innere Struktur mit mindestens einem Teil ihrer Ausstattungen versieht, wenn eines der entsprechenden Module in der Verlängerung des anderen platziert wird, bevor man diese Module trennt.

6. Verfahren nach einem der Ansprüche 1 bis 5, **dadurch gekennzeichnet, dass** man für jedes Modul den Bau beendet, indem man ein Schutzblechwerk auf den entsprechenden Abschnitt (5, 7) äußere Struktur mit Ausnahme zumindest der Zonen des Anschlusses an andere Module legt.

7. Verfahren nach einem der Ansprüche 1 bis 6, **dadurch gekennzeichnet, dass** die äußere Struktur eine Tragstruktur ist.

8. Verfahren nach einem der Ansprüche 1 bis 7, **dadurch gekennzeichnet, dass** man ein Modul über dem anderen Modul zusammenbaut, um die innere Struktur am Standort aufzustellen.

9. Verfahren nach den Ansprüchen 3 und 8, wobei die Vertikalität der inneren Struktur am Standort gewährleistet werden muss, **dadurch gekennzeichnet, dass** man:
- das untere Modul so positioniert, dass die Längsachse des entsprechenden Abschnitts (5) äußere Struktur senkrecht ist, und
- das nächste Modul über dem unteren Modul zusammenbaut.

10. Verfahren nach Anspruch 8, wobei die Vertikalität der inneren Struktur am Standort gewährleistet werden muss, **dadurch gekennzeichnet, dass** man mindestens einen Abschnitt (1, 3) innere Struktur vom Abschnitt (5, 7) äußere Struktur eines aufgestellten Moduls vorläufig löst, um die Vertikalität des Abschnitts (1, 3) innere Struktur zu gewährleisten.

11. Verfahren nach einem der Ansprüche 8 bis 10, **dadurch gekennzeichnet, dass** man:
- das Ausstatten der inneren Struktur insbesondere durch Anschließen der Ausstattungen der daneben liegenden Abschnitte (1, 3) innere Struktur beendet und
- das Verlegen des Schutzblechwerks beendet.

## Claims

1. Method of constructing a large elongate internal structure surrounded by an external structure, the said internal structure being a distillation column intended to form at least part of a fluid delivery plant, in which two modules are constructed, for each of the modules, by joining a half-column which is a section (1, 3) of the internal structure to a corresponding section (5, 7) of the external structure, these two modules being intended to be joined together on site in order to form the internal structure surrounded by the external structure.

2. Method according to Claim 1, **characterized in that** at least one internal structure section (1, 3) is introduced into the corresponding external structure section (5, 7) by pulling it in, especially by moving it along rails (31) provided in the said external structure section (5, 7), which lies approximately horizontally, and then these two sections are fastened together.

3. Method according to Claim 2, **characterized in that** each internal structure section (1, 3) is introduced into and then positioned in the corresponding external structure section (5, 7), in an identical manner and parallel to a predetermined longitudinal axis of the external structure, before these two sections are fastened together.

4. Method according to Claim 3, **characterized in that** the ends of external and internal structure sections are provided respectively with means (17, 32) for guiding adjacent sections and **in that**, after the internal structure section (1) has been positioned with respect to the external structure section (5) of a first module and after these two sections have been fastened together, for an adjacent module:
- the internal structure section (3) is introduced into the corresponding external structure section (7),
- the internal structure section (3) and the external structure section (7) of the said adjacent module are placed, by virtue of the respective guiding means (17, 32), in the extension of the internal structure section (1) and of the external structure section (5) of the first module, respectively,
- the two external structure sections (5, 7) are aligned, and
- the internal structure section (3) of the said adjacent module is positioned with respect to its external structure section (7) and these two sections (3, 7) are fastened together.

5. Method according to Claim 4, **characterized in that**, when the corresponding modules are placed one in the extension of the other, at least two adjacent internal structure sections (1, 3) are equipped with at least some of their items of equipment before these modules are separated.

6. Method according to any one of Claims 1 to 5, **characterized in that**, for each module, the construction is completed by fitting protective metal sheeting over the corresponding external structure section (5, 7), except at least in the regions of connection to the other modules.

7. Method according to any one of Claims 1 to 6, **characterized in that** the external structure is a support framework.

8. Method according to any one of Claims 1 to 7, **characterized in that** one module is assembled on top of the other module in order to erect the internal structure on site.

9. Method according to Claims 3 and 8, **characterized in that**, since it is necessary to check on site the verticality of the internal structure:
- the bottom module is positioned in such a way that the said longitudinal axis of the corresponding external structure section (5) is vertical; and
- the next module is assembled on top of the bottom module.

10. Method according to Claim 8, **characterized in that**, since it is necessary to check on site the verticality of the internal structure, at least one internal structure section (1, 3) is temporarily disconnected from the external structure section (5, 7) of an erected module in order to check the verticality of the said internal structure section (1, 3).

11. Method according to any one of Claims 8 to 10, **characterized in that**:
- the equipping of the internal structure is completed, especially by connecting the items of equipment of the adjacent internal structure sections (1, 3); and
- the fitting of the protective metal sheeting is completed.
